# EUROPEAN PATENT APPLICATION

(11) **EP 4 333 117 A1**
(43) Date of publication of application: **06.03.2024**
(21) Application number: 22889072.9
(22) Date of filing: 12.10.2022
(51) Int. Cl.: H01M 4/36

(54) **POSITIVE ELECTRODE ACTIVE MATERIAL AND PREPARATION METHOD THEREFOR, LITHIUM-ION BATTERY COMPRISING SAME, BATTERY MODULE, BATTERY PACK, AND ELECTRIC APPARATUS**

(30) Priority: 02.11.2021 CN 202111291132
(71) Applicant: Contemporary Amperex Technology Co., Limited, Ningde, Fujian 352100 (CN)
(72) Inventor: ZHANG, Cuiping, Ningde, Fujian 352100 (CN); HAN, Changlong, Ningde, Fujian 352100 (CN); REN, Miaomiao, Ningde, Fujian 352100 (CN); WU, Zeli, Ningde, Fujian 352100 (CN); HUANG, Lei, Ningde, Fujian 352100 (CN)
(74) Representative: Gong, Jinping
(86) International application number: PCT/CN2022/124925
(87) International publication number: WO 2023/078047

(57) **Abstract**

This application provides a positive electrode active material. Surface of a first lithium salt is coated with a coating layer containing a second lithium salt, which not only blocks the corrosive decomposition of the first lithium salt by the electrolyte but also allows the second lithium salt to form CEI films in situ on surfaces of the first lithium salt particles, thereby improving the film structure and avoiding the decomposition of active components in the electrolyte. Additionally, the second lithium salt contains both elements fluorine and phosphorus, which makes the composition of the film formed as consistent as possible with the composition of the film formed by lithium hexafluorophosphate in the electrolyte, thereby reducing the consumption of active lithium in the electrolyte. The positive electrode active material of this application can significantly improve the power performance and cycle life of batteries.

## Description

### CROSS-REFERENCE TO RELATED APPLICATIONS

This application claims priority to Chinese Patent Application No. 202111291132.0, filed on November 02, 2021 and entitled "POSITIVE ELECTRODE ACTIVE MATERIAL, PREPARATION METHOD THEREOF, AND LITHIUM-ION BATTERY, BATTERY MODULE, BATTERY PACK, AND ELECTRIC APPARATUS CONTAINING SAME", which is incorporated herein by reference in its entirety.

### TECHNICAL FIELD

This application relates to the electrochemical field, and in particular, to a positive electrode active material, and a lithium-ion battery, a battery module, a battery pack, and an electric apparatus including the same.

### BACKGROUND

With the rapid development of the new energy field, lithium-ion batteries, by virtue of their excellent electrochemical performance, no memory effect, and low environmental pollution, have been widely used in various large-scale power devices, energy storage systems, and consumer products. They find extensive applications particularly in new energy vehicle sectors, such as battery electric vehicles and hybrid electric vehicles. This poses higher demands on overall improvement of the service life and fast-charging capability of lithium-ion batteries.

### SUMMARY

This application has been made in view of the foregoing issues, and is intended to provide a positive electrode active material, enabling lithium-ion batteries to have both excellent power performance and cycle life.

A first aspect of this application provides a positive electrode active material including a substrate and a coating layer located on surface of the substrate, where the substrate includes a first lithium salt, the first lithium salt being selected from at least one of layered-structure LiAO₂, Li[NiₐCo_{b}Mn_{c}]O₂, and lithium-rich manganese-based system xLi₂MnO₃·(1-x)LiMn_{y}B_{1-y}O₂, where A is Ni, Co, Mn, or Al, B is selected from one or two metal ions of Ni, Co, or Al, 0.1≤x≤0.9, 0.1≤y≤0.9, 0<a<1, 0<b<1, 0<c<1, and a+b+c=1; and the coating layer includes a second lithium salt containing fluorine, phosphorus, and oxygen, the oxygen in the second lithium salt containing lone electron pairs.

In any embodiment, based on total mass of the positive electrode active material, a mass percentage of the second lithium salt is 0.1% to 20%, optionally 1% to 10%.

In any embodiment, thickness of the coating layer of the positive electrode active material is 10 µm-100 µm, and optionally, 20 µm-60 µm.

In any embodiment, the second lithium salt is selected from at least one of lithium difluorophosphate, lithium difluorobisoxalatephosphate, and lithium tetrafluorooxalatephosphate.

In any embodiment, the positive electrode active material includes first particles with a median particle size by volume Dᵥ50 of 2 µm to 8 µm and second particles with a median particle size by volume Dᵥ50 of 13 µm to 22 µm.

In any embodiment, a mass ratio of the first particles to the second particles is 2.3-9:1.

In any embodiment, the first and/or second particles include two crystal forms: monocrystalline and polycrystalline, and a mass ratio of monocrystalline particles to polycrystalline particles is 0.1-1: 1, optionally 0.23-0.67: 1.

A second aspect of this application provides a preparation method of positive electrode active material, including the following steps:
S1: drying and dehydrating a first lithium salt to obtain the dried first lithium salt;
S2: dissolving a second lithium salt in an organic solvent to obtain an organic solution of the second lithium salt;
S3: adding the dried first lithium salt to the organic solution of the second lithium salt and mixing to uniformity; and
S4: filtering the well-mixed mixture, and subjecting the resulting solid particles to heat treatment to obtain the positive electrode active material, where the positive electrode active material includes a substrate and a coating layer on surface of the substrate, where
the substrate includes a first lithium salt, the first lithium salt being selected from at least one of spinel-structure LiAO₄, layered-structure LiBO₂, and lithium-rich manganese-based system xLi₂MnO₃·(1-x)LiCO₂, where A is Ni or Co, B is Ni, Co, Mn, or Al, C is selected from Ni, Co, or Mn, and 0.1<x<0.9; and the coating layer includes a second lithium salt containing both fluorine and phosphorus.

In any embodiment, the method further includes step S0 before step S1, where step S0 includes a step of preparing a monocrystalline first lithium salt and/or a polycrystalline first lithium salt.

In any embodiment, the method further includes step S5, where step S5 is adjusting a median particle size by volume Dᵥ50 of the positive electrode active material to obtain first particles with a median particle size by volume Dᵥ50 of 2 µm to 8 µm and second particles with a median particle size by volume Dᵥ50 of 13 µm to 22 µm.

In any embodiment, the method further includes step S6, where step S6 includes mixing the first particles and the second particles according to a predetermined mass ratio to obtain the positive electrode active material.

In any embodiment, in S1, a temperature range for drying and dehydrating the first lithium salt is 100°C-200°C; and/or
in S2, the organic solvent is an ether, carboxylic acid ester, or carbonate ester organic solvent; and/or
in S3, the mixing to uniformity is performed by stirring and dispersing at 50°C-100°C for 4 h-8 h; and/or
in S4, the heat treatment is performed at 200°C-250°C in an air atmosphere for 5 h-10 h.

A third aspect of this application provides a lithium-ion battery, including the high-nickel ternary positive electrode active material in the first aspect of this application or a high-nickel ternary positive electrode active material prepared using the preparation method in the second aspect of this application.

A fourth aspect of this application provides a battery module including the lithium-ion battery in the third aspect of this application. The battery module can be manufactured using methods known in the prior art for manufacturing battery modules.

A fifth aspect of this application provides a battery pack including at least one of the lithium-ion battery in the third aspect of this application or the battery module in the fourth aspect of this application. The battery pack can be manufactured using methods known in the prior art for manufacturing battery packs.

A sixth aspect of this application provides an electric apparatus including at least one of the lithium-ion battery in the third aspect of this application, the battery module in the fourth aspect of this application, or the battery pack in the fifth aspect of this application, where the lithium-ion battery, the battery module, or the battery pack is used as a power source of the electric apparatus or an energy storage unit of the electric apparatus. The electric apparatus can be manufactured using methods known in the prior art for manufacturing electric apparatuses.

### [Beneficial effects]

In this application, surface of the first lithium salt is coated with a coating layer containing the second lithium salt, which not only blocks the corrosive decomposition of the first lithium salt by the electrolyte but also allows the second lithium salt to form CEI (cathode electrolyte interface) films in situ on surfaces of the first lithium salt particles, thereby improving the film structure and avoiding the decomposition of active components in the electrolyte. Additionally, the second lithium salt contains both elements fluorine and phosphorus, which makes the composition of the film formed as consistent as possible with the composition of the CEI film formed by lithium hexafluorophosphate (electrolytic salt) in the liquid electrolyte, thereby reducing the consumption of active lithium in the electrolyte. The positive electrode active material of this application can significantly improve the power performance and cycle life of batteries.

The battery module, battery pack, and electric apparatus of this application include the lithium-ion battery provided in this application, and therefore have at least the same advantages as the lithium-ion battery.

### BRIEF DESCRIPTION OF DRAWINGS

FIG. 1 is a schematic structural diagram of a positive electrode active material according to this application;
FIG. 2 shows an SEM image (figure A) of a positive electrode active material according to an example of this application and an SEM image (figure B) of a positive electrode active material according to Comparative Example 1 of this application;
FIG. 3 is a schematic diagram of a lithium-ion battery according to an embodiment of this application;
FIG. 4 is an exploded view of the lithium-ion battery according to the embodiment of this application shown in FIG. 2;
FIG. 5 is a schematic diagram of a battery module according to an embodiment of this application;
FIG. 6 is a schematic diagram of a battery pack according to an embodiment of this application;
FIG. 7 is an exploded view of the battery pack according to the embodiment of this application shown in FIG. 5; and
FIG. 8 is a schematic diagram of an electric apparatus according to an embodiment of this application.

### Description of reference signs:

1. battery pack;
2. upper box body;
3. lower box body;
4. battery module;
5. lithium-ion battery;
51. housing;
52. electrode assembly; and
53. top cover assembly.

### DESCRIPTION OF EMBODIMENTS

The following specifically discloses embodiments of a positive electrode active material and a manufacturing method thereof, a positive electrode plate, a secondary battery, a battery module, a battery pack, and an electrical apparatus in this application with appropriate reference to detailed descriptions of accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed sequentially or randomly, and preferably, are performed sequentially. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

It should be noted that the term "coating layer" refers to a portion that envelops the surface of the substrate, and this portion may or may not envelop the entire "substrate." The use of the term "coating layer" is only for ease of description but not intended to limit this application.

For a series of positive electrode active materials in lithium-ion batteries, especially in nickel-cobalt-manganese ternary systems, there are two unavoidable drawbacks that are detrimental to electrochemical performance: (1) high oxidation activity; and (2) slow solid-state lithium ion transport. The high oxidation activity leads to continuous oxidative decomposition of the electrolyte on the surface of the positive electrode during battery cycling, along with consumption of limited active lithium in the positive electrode. The deposition of decomposition products on the surface of the positive electrode significantly increases the diffusion resistance of lithium ions at the interface, thus reducing the power performance and cycle life of the battery. Therefore, it is necessary to modify the positive electrode active material to overcome these drawbacks.

The continuous oxidative decomposition of the electrolyte on the surface of the positive electrode is actually a process in which components such as the solvent, electrolytic salt, and additive in the electrolyte are continuously decomposed at the positive electrode to form a CEI (cathode electrolyte interface) film on the surface of the positive electrode. Therefore, if in-situ coating of the effective components of the pre-formed CEI film on the positive electrode active material can be modified to make the effective components of the pre-formed CEI film form a film on the surface of the positive electrode active material, the probability of electrolyte oxidation can be significantly reduced without causing the consumption of active lithium and the deposition of electrolyte decomposition by-products, thereby significantly improving the power and cycling performance of the battery.

Some lithium salts that contain both elements fluorine and phosphorus, such as lithium difluorophosphate, are generally added as additives to the electrolyte to improve battery cycling performance. However, they are hard to dissolve in the electrolyte, leading to low utilization. In addition, the addition of lithium difluorophosphate to the electrolyte results in a low conductivity, and even a small addition amount of 1% will severely worsen the conductivity, which is unfavorable for the power performance of the battery.

Therefore, in this application, lithium salts, such as lithium difluorophosphate, are used as modifiers for modification of the positive electrode active material, which not only solves the above problems but also significantly improves the power and cycling performance of lithium-ion batteries.

### [Positive electrode active material]

This application provides a positive electrode active material including a substrate and a coating layer located on surface of the substrate.

The substrate includes a first lithium salt, the first lithium salt being selected from at least one of layered-structure LiAO₂, Li[NiₐCo_{b}Mn_{c}]O₂, and lithium-rich manganese-based system xLi₂MnO₃·(1-x)LiMn_{y}B_{1-y}O₂, where A is Ni, Co, Mn, or Al, B is selected from one or two metal ions of Ni, Co, or Al, 0.1≤x≤0.9, 0.1≤y≤0.9, 0<a<1, 0<b<1, 0<c<1, and a+b+c=1. The coating layer includes a second lithium salt containing elements fluorine, phosphorus, and oxygen, the oxygen in the second lithium salt containing lone electron pairs.

In this application, surface of the first lithium salt is coated with a coating layer containing the second lithium salt, which not only blocks the corrosive decomposition of the first lithium salt in the substrate by the electrolyte but also allows the second lithium salt to form CEI films in situ on surfaces of the first lithium salt particles, thereby improving the film structure and improving the transport speed of lithium ions in the positive electrode active material. Additionally, the second lithium salt contains both elements fluorine and phosphorus, which makes the composition of the film formed as consistent as possible with the composition of the CEI film formed by lithium hexafluorophosphate (electrolytic salt) in the liquid electrolyte, thereby reducing the consumption of active lithium in the electrolyte. To sum up, the positive electrode active material of this application can significantly improve the power performance and cycle life of batteries.

In some embodiments, the second lithium salt is selected from at least one of lithium difluorophosphate, lithium difluorobisoxalatephosphate, and lithium tetrafluorooxalatephosphate.

The constitutional formulas of lithium difluorophosphate, lithium difluorobisoxalatehosphate, and lithium tetrafluorooxalatehoshate are as follows:

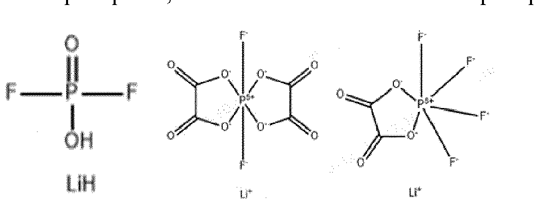

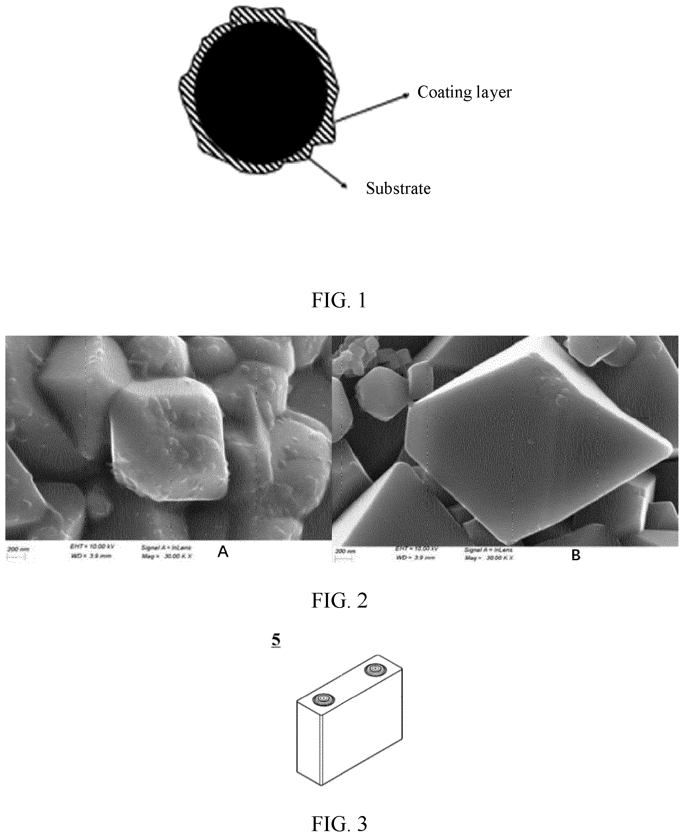

The structure of the second lithium salt not only allows for in-situ synthesis of the CEI film on the surface of the first lithium salt and optimization of the film structure, but also possesses oxygen lone pairs. The oxygen electron lone pairs in the second lithium salt enable lithium difluorophosphate and the transition metal ions in the first lithium salt to be tightly attached to the surface of the first lithium salt as an uniform coating layer through complexation (as shown in FIG. 1B, the untreated positive electrode active material particles have smooth surfaces; as shown in FIG. 1A, the surface of the modified positive electrode active material in this application has a rough layer with protruding agglomerated particles). This not only prevents the detachment of the coating layer from the substrate, but also effectively prevents the dissolution of transition metal from the first lithium salt, thereby preventing the performance degradation of the battery.

Further, the second lithium salt is optionally lithium tetrafluorooxalatephosphate. The second lithium salt with a high content of fluorine atoms can increase the stability of the formed CEI film, which is more beneficial to performance improvement of the battery. Experiments have shown that under the same conditions, the positive electrode active material using lithium tetrafluorooxalatephosphate as the second lithium salt can improve the cycling performance by about 5% and reduce the battery DCR by about 10%.

Further, a surface of the coating layer of the positive electrode active material in this application has protruding agglomerated particles formed by the second lithium salt.

The coating layer of the positive electrode active material in this application consists of a relatively flat layer on the surface and protruding agglomerated particles on the layer surface. The second lithium salts are uniformly distributed in the relatively flat layer, thereby improving the microstructure of the CEI film on the surface of the positive electrode active material and improving the transport speed of lithium ions in the positive electrode active material. In addition, the protruding agglomerated particles are composed of the second lithium salts, which are beneficial for supplementing lithium salt to the battery after long-term cycling, increasing the amount of active lithium in the electrolyte, and improving the service life of the battery.

In some embodiments, based on total mass of the positive electrode active material, a mass percentage of the second lithium salt is 0.1% to 20%, optionally 1% to 10%.

When the mass ratio of the second lithium salt in the positive electrode is less than 0.1%, an effective coating layer cannot be formed, thus failing to effectively prevent the contact between the positive electrode active material and the electrolyte, that is, failing to effectively suppress side reactions of the electrolyte at the positive electrode interface. When the mass ratio of the second lithium salt in the positive electrode is greater than 10%, no further improvement can be achieved, but costs are increased and transport of lithium ions is hindered.

In some embodiments, thickness of the coating layer of the positive electrode active material is 10 nm-100 nm, and optionally, 20 nm-60 nm.

Controlling the thickness of the coating layer within a reasonable range can maintain the effectiveness of the second lithium salt, and prevent degradation of power performance caused by hindered lithium ion transport.

In some embodiments, the positive electrode active material includes first particles with a median particle size by volume Dᵥ50 of 2 µm to 8 µm and second particles with a median particle size by volume Dᵥ50 of 13 µm to 22 µm.

In some embodiments, the positive electrode active material consists of first particles and second particles, and a mass ratio of the first particles to the second particles is 2.3-9:1.

The adaptive allocation of the first particles and second particles allows for more positive electrode active substance per unit thickness of the positive electrode film layer, increasing the compacted density of the material and improving the energy density of the battery.

Further, when the mass ratio of the first particles to the second particles is greater than 9:1, more large particles in the material increase the path length for lithium ions to transport in the solid phase, affecting the power performance of the battery. When the mass ratio of the first particles to the second particles is less than 2.3:1, the positive electrode active material contains more small particles, and the material has a large specific surface area, which may lead to uneven coating by the coating layer, thus affecting effectiveness of the second lithium salt.

The particle size of the positive electrode material can be achieved through existing crushing processes. For example, first particles with a size of 2 µm to 8 µm can be obtained using a mechanical crusher, and second particles with a size of 13 µm to 22 µm can be obtained using an airflow crusher.

In some embodiments, the first and/or second particles include two crystal forms: monocrystalline and polycrystalline.

In this application, monocrystal has a long ion transport paths but small specific surface area and fewer side reactions. Polycrystal has large specific surface area and more side reactions, but short lithium ion transport paths and good power performance. Combination of the two types can obtain their advantages.

This application provides a preparation method of positive electrode active substance, including the following steps:
S1: drying and dehydrating a first lithium salt to obtain the dried first lithium salt;
S2: dissolving a second lithium salt in an organic solvent to obtain an organic solution of the second lithium salt;
S3: adding the dried first lithium salt to the organic solution of the second lithium salt and mixing to uniformity; and
S4: filtering the well-mixed mixture, and subjecting the resulting solid particles to heat treatment to obtain the positive electrode active material, where the positive electrode active material includes a substrate and a coating layer on surface of the substrate, where
the substrate includes a first lithium salt, the first lithium salt being selected from at least one of layered-structure LiAO₂, Li[NiₐCo_{b}Mn_{c}]O₂, and lithium-rich manganese-based system xLi₂MnO₃·(1-x)LiMn_{y}B_{1-y}O₂, where A is Ni, Co, Mn, or Al, B is selected from one or two metal ions of Ni, Co, or Al, 0.1≤x≤0.9, 0.1≤y≤0.9, 0<a<1, 0<b<1, 0<c<1, and a+b+c=1; and the coating layer includes a second lithium salt containing both fluorine and phosphorus.

In some embodiments, the method further includes step S0 before step S1, where step S0 includes a step of preparing a monocrystalline first lithium salt and/or a polycrystalline first lithium salt.

In some embodiments, the method further includes step S5, where step S5 is adjusting a median particle size by volume Dᵥ50 of the positive electrode active material to obtain first particles with a median particle size by volume Dᵥ50 of 2 µm to 8 µm and second particles with a median particle size by volume Dᵥ50 of 13 µm to 22 µm.

In some embodiments, the method further includes step S6, where step S6 includes mixing the first particles and the second particles according to a predetermined mass ratio to obtain the positive electrode active material.

In some embodiments, in step S1, a temperature range for drying and dehydrating the first lithium salt is 100°C-200°C.

In some embodiments, in step S2, the organic solvent is an ether, carboxylic acid ester, or carbonate ester organic solvent.

In some embodiments, in step S3, the mixing to uniformity is performed by stirring and dispersing at 50°C-100°C for 4 h-8 h.

In some embodiments, in step S4, the heat treatment is performed at 200°C-250°C in an air atmosphere for 5 h-10 h.

### [Positive electrode plate]

This application provides a positive electrode plate, where the positive electrode plate includes the positive electrode active material of this application.

The positive electrode plate includes a positive electrode current collector and a positive electrode material disposed on at least one surface of the positive electrode current collector. For example, the positive electrode current collector has two opposite surfaces in a thickness direction thereof, and the positive electrode material is disposed on either or both of the two opposite surfaces of the positive electrode current collector.

In the lithium-ion battery of this application, the positive electrode current collector may be a metal foil or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, a matrix of polypropylene (PP), polyethylene terephthalate (PET), polybutylene terephthalate (PBT), 1,3-propanesultone (PS), or polyethylene (PE)). However, this application is not limited to these materials.

The positive electrode material further optionally includes a conductive agent. The conductive agent is not limited to a specific type, and may be selected by persons skilled in the art based on actual needs. For example, the conductive agent used in the positive electrode material may be selected from more than one of superconducting carbon, acetylene black, carbon black, Ketjen black, carbon dots, carbon nanotubes, graphene, and carbon nanofiber.

The positive electrode plate in this application may be prepared by using the method known in the art. For example, a positive electrode active material, the conductive agent, and a binder are dissolved in a solvent (for example, N-methylpyrrolidone (NMP)) to form a uniform positive electrode slurry; and the positive electrode slurry is applied on a positive electrode current collector, and processes such as drying and cold pressing are performed to obtain a positive-electrode plate.

### [Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In the lithium-ion battery of this application, the negative electrode current collector may be a metal foil or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, a matrix of polypropylene (PP), polyethylene terephthalate (PET), polybutylene terephthalate (PBT), polystyrene (PS), or polyethylene (PE)). However, this application is not limited to these materials.

In the negative electrode plate of this application, the negative electrode film layer usually includes the negative electrode active material, an optional binder, an optional conductive agent, and other optional additives, and is usually formed by being coated with a negative electrode slurry and dried. The negative electrode slurry is usually obtained by dispersing the negative electrode active material and the optional conductive agent, binder, and others in a solvent and stirring them to a uniform mixture. The solvent may be N-methylpyrrolidone (NMP) or deionized water.

For example, the conductive agent may be selected from more than one of superconducting carbon, acetylene black, carbon black, Ketjen black, carbon dots, carbon nanotubes, graphene, and carbon nanofiber.

In the negative electrode plate of this application, in addition to the negative electrode active material, the negative electrode film layer further optionally includes other commonly used negative electrode active materials. For example, other commonly used negative electrode active materials include artificial graphite, natural graphite, soft graphite, soft carbon, hard carbon, silicon-based material, tin-based material, lithium titanate, and the like. The silicon-based material may be selected from more than one of elemental silicon, silicon-oxygen compound, silicon-carbon composite, silicon-nitrogen composite, and silicon alloy. The tin-based material may be selected from more than one of elemental tin, tin-oxygen compound, and tin alloy.

### [Electrolyte]

The electrolyte conducts ions between the positive electrode plate and the negative electrode plate. The electrolyte is not specifically limited to any particular type in this application, and may be selected based on needs. For example, the electrolyte may be selected from at least one of a solid electrolyte and a liquid electrolyte (that is, an electrolyte solution).

In some embodiments, the electrolyte is a liquid electrolyte. The liquid electrolyte includes an electrolytic salt and a solvent.

In some embodiments, the electrolytic salt may be selected from more than one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO₂F₂), lithium difluorodioxalatephosphate (LiDFOP), and lithium tetrafluorooxalatephosphate (LiTFOP).

In some embodiments, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methylmethyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), tetramethylene sulfone (SF), methyl sulfone (MSM), ethyl methyl sulfone (EMS), and diethyl sulfone (ESE).

In some embodiments, the electrolyte solution further optionally includes an additive. For example, the additives may include a negative electrode film-forming additive, or may include a positive electrode film-forming additive, or may include an additive that can improve some performance of a battery, for example, an additive for improving over-charge performance of the battery, an additive for improving high-temperature performance of the battery, and an additive for improving low-temperature performance of the battery.

### [Separator]

Lithium-ion batteries using an electrolyte solution and some lithium-ion batteries using a solid electrolyte further include a separator. The separator is disposed between the positive electrode plate and the negative electrode plate to provide separation. The separator is not limited to any particular type in this application, and may be any well-known porous separator with good chemical stability and mechanical stability. In some embodiments, a material of the separator may be selected from more than one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

### [Lithium-ion battery]

In some embodiments, the positive electrode plate, the negative electrode plate, and the separator may be made into an electrode assembly through winding or lamination. The positive electrode plate includes the lithium iron phosphate positive electrode active material of this application.

In some embodiments, the lithium-ion battery may include an outer package. The outer package may be used for packaging the electrode assembly and the electrolyte.

In some embodiments, the outer package of the lithium-ion battery may be a hard shell, for example, a hard plastic shell, an aluminum shell, or a steel shell. The outer package of the lithium-ion battery may alternatively be a soft pack, for example, a soft pouch. A material of the soft pack may be plastic. As the plastic, polypropylene (PP), polybutylene terephthalate (PBT), and polybutylene succinate (PBS) may be listed.

The lithium-ion battery is not limited to any specific shape in this application, and the lithium-ion battery may be cylindrical, rectangular, or of any other shape. For example, FIG. 2 shows a lithium-ion battery 5 of a rectangular structure as an example.

In some embodiments, referring to FIG. 3, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates into the electrode assembly 52. There may be one or more electrode assemblies 52 in the lithium-ion battery 5, and persons skilled in the art may make choices based on actual needs.

### [Battery module]

In some embodiments, the lithium-ion batteries may be assembled into a battery module, and the battery module may include one or more lithium-ion batteries. A specific quantity may be selected by persons skilled in the art based on use and capacity of the battery module.

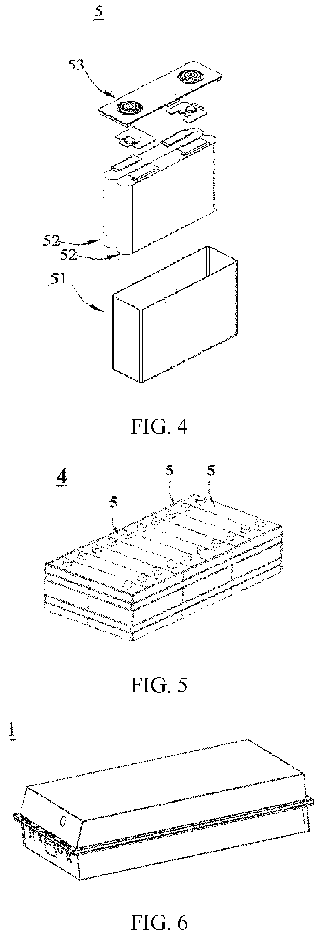

FIG. 4 shows a battery module 4 as an example. Referring to FIG. 4, in the battery module 4, a plurality of lithium-ion batteries 5 may be sequentially arranged in a length direction of the battery module 4. Certainly, the batteries may alternatively be arranged in any other manners. Further, the plurality of lithium-ion batteries 5 may be fixed by using fasteners.

Optionally, the battery module 4 may further include a housing with an accommodating space, and the plurality of lithium-ion batteries 5 are accommodated in the accommodating space.

### [Battery pack]

In some embodiments, the battery module may be used to assemble a battery pack, and the quantity of battery modules included in the battery pack may be chosen by persons skilled in the art based on use and capacity of the battery pack.

FIG. 5 and FIG. 6 show a battery pack 1 as an example. Referring to FIG. 5 and FIG. 6, the battery pack 1 may include a battery box and a plurality of battery modules 4 arranged in the battery box. The battery box includes an upper box body 2 and a lower box body 3, where the upper box body 2 can cover the lower box body 3 to form an enclosed space for accommodating the battery modules 4. The plurality of battery modules 4 may be arranged in the battery box in any manner.

### [Electric apparatus]

This application further provides an electric apparatus. The electric apparatus includes more than one of the lithium-ion battery, the battery module, or the battery pack provided in this application. The lithium-ion battery, the battery module, or the battery pack may be used as a power source of the apparatus or an energy storage unit of the apparatus. The apparatus may be but is not limited to a mobile device (for example, a mobile phone or a laptop computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

A lithium-ion battery, a battery module, or a battery pack may be selected for the electric apparatus based on requirements for using the electric apparatus.

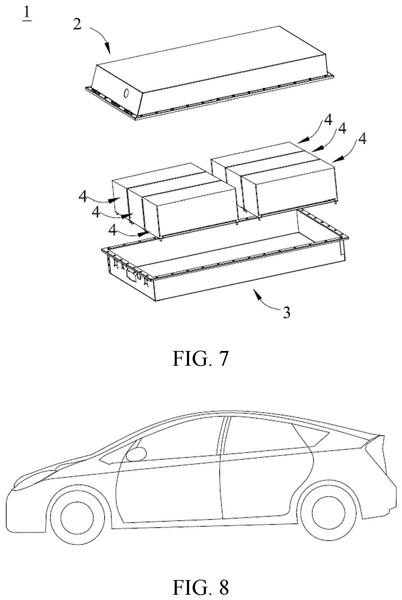

FIG. 7 shows an apparatus as an example. The apparatus is a battery electric vehicle, a hybrid electric vehicle, or a plug-in hybrid electric vehicle, or the like. To meet a requirement of the apparatus for high power and a high energy density of a lithium-ion battery, a battery pack or a battery module may be used.

In another example, the apparatus may be a mobile phone, a tablet computer, a notebook computer, or the like. The apparatus is generally required to be light and thin, and may use the lithium-ion battery as a power source.

### Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used, where no manufacturer is indicated, are conventional products commonly used in the field and commercially available. The amounts of components in the examples of this application are all measured by weight, unless otherwise specified.

### Examples

### Example 1

### [Preparation of positive electrode active material]

S0: Preparation of monocrystalline/polycrystalline first lithium salt LiNi_{0.8}Co_{0.1}Mn_{0.1}O₂
   (S01): Preparation of monocrystalline LiNi_{0.8}Co_{0.1}Mn_{0.1}O₂
      The precursor Ni_{0.8}Co_{0.1}Mn_{0.1}(OH)₂ and lithium carbonate were added to a mortar and continuously ground for 10-15 minutes until they were well mixed, where the molar ratio of lithium to total transition metals was 1.2-1.25. The mixture was then placed in a tubular furnace, air was purged with nitrogen, and then oxygen was introduced for heating. After temperature was raised to 820°C-900°C, calcination lasted for 12 h. The initial heating rate was 10°C/min, and the final cooling rate was 10°C/min. After cooling, the mixture was ground in the mortar and sieved to obtain the monocrystalline LiNi_{0.8}Co_{0.1}Mn_{0.1}O₂.
   (S02): The precursor Ni_{0.8}Co_{0.1}Mn_{0.1}(OH)₂ and lithium carbonate were added to a mortar and continuously ground for 10-15 minutes until they were well mixed, where the molar ratio of lithium to total transition metals was 1.0-1.15. The mixture was then placed in a tubular furnace, air was purged with nitrogen, and then oxygen was introduced for heating. After temperature was raised to 600°C-800°C, calcination lasted for 12 h. The initial heating rate was 10°C/min, and the final cooling rate was 10°C/min. After cooling, the mixture was ground in the mortar and sieved to obtain the polycrystalline LiNi_{0.8}Co_{0.1}Mn_{0.1}O₂.
S1: The monocrystalline LiNi_{0.8}Co_{0.1}Mn_{0.1}O₂ and polycrystalline LiNi_{0.8}Co_{0.1}Mn_{0.1}O₂ were mixed well at a mass ratio of 0.4:1, and dried and dehydrated at 150°C for 2 h to obtain the dried first lithium salt.
S2: The second lithium salt, lithium difluorophosphate, was dissolved in 1,2-dimethoxyethane (to make lithium difluorophosphate at a mass percentage of 15%).
S3: The dried first lithium salt was added to the 1,2-dimethoxyethane solution of the second lithium salt, and stirred and dispersed at 30°C for 4 h, where the amount of the first lithium salt added was 90% of the total mass of the first lithium salt and second lithium salt.
S4: The well-mixed mixture obtained in the previous step was filtered, and the resulting solid particles were subjected to treatment in an air atmosphere at 200°C for 5 h to obtain a positive electrode active material including both monocrystalline and polycrystalline particles.
S5: Preparation of first particle/second particle
   The positive electrode active material obtained in step S4 was crushed in a mechanical crusher at a specified frequency to obtain first particles with a particle size of 5 µm; and the positive electrode active material obtained in step S4 was crushed in an airflow crusher at a specified frequency to obtain second particles with a particle size of 15 µm.
S6: The first particles and the second particles were mixed at a mass ratio of 3:1 to obtain the positive electrode active material of Example 1.

### [Positive electrode plate]

The positive electrode active material of Example 1, conductive agent Super P, and binder polyvinylidene fluoride (PVDF) were added to N-methylpyrrolidone (NMP) to make a positive electrode slurry. A solid content of the positive electrode slurry was 50wt%, and a mass ratio of the positive electrode active material, Super P, and PVDF in the solid was 8:1:1. The positive electrode slurry was applied on a current collector aluminum foil, and the current collector was dried at 85°C and cold-pressed, followed by trimming, cutting, slitting, and drying under a vacuum condition at 85°C for 4 h, to prepare a positive electrode plate.

### [Negative electrode plate]

A negative electrode active material graphite, a conductive agent Super P, a thickener CMC, and a binder styrene-butadiene rubber (SBR) were well mixed in deionized water to prepare a negative electrode slurry. A solid content of the negative electrode slurry was 30wt%, and a mass ratio of graphite, Super P, CMC, and styrene-butadiene rubber (SBR) in the solid was 80:15:3:2. The negative electrode slurry was applied on a current collector copper foil, and the resulting current collector was dried at 85°C, followed by cold pressing, trimming, cutting, slitting, and drying under a vacuum condition at 120°C for 12 h, to prepare a negative electrode plate.

### [Electrolyte]

EC, DEC, and DMC were mixed at a volume ratio of 1:1:1, and LiPF₆ was added to the mixture to form an electrolyte. In the electrolyte, concentration of LiPF₆ was 1 mol/L.

### [Separator]

A polyethylene film was used as a separator.

### [Preparation of lithium-ion battery]

The positive electrode plate, the separator, and the negative electrode plate were stacked in sequence, so that the separator was sandwiched between positive and negative electrode plates for separation. Then the stack was wound to form a prismatic bare cell. The bare cell was placed in an aluminum-plastic film, and a corresponding non-aqueous electrolyte was injected, followed by processes such as packaging, standing, hot/cold pressing, formation, clamping, and grading, to obtain a lithium-ion battery.

### Comparative Example 1

The conventional commercially available LiNi_{0.8}Co_{0.1}Mn_{0.1}O₂ was used. The product type was HAH101 (purchased from Hunan Brunp Recycling Technology Co., Ltd.).

The remaining preparation processes were the same as those in Example 1.

### Example 2

In [Preparation of positive electrode active material], in step S1, the first lithium salt used was LiNiO₂, and the second lithium salt used was lithium difluorobisoxalatephosphate; in step S3, the amount of the first lithium salt added was 91% of the total mass of the first lithium salt and second lithium salt; and in step S5, the particle size of the first particles was made to 7 µm, and the particle size of the second particles was made to 16 µm. The remaining preparation processes were the same as those in Example 1.

### Example 3

In [Preparation of positive electrode active material], in step S1, the first lithium salt used was LiMnO₂, and the second lithium salt used was lithium tetrafluorooxalatephosphate; in step S3, the amount of the first lithium salt added was 91% of the total mass of the first lithium salt and second lithium salt; and in step S6, the mixed mass ratio of the first particles to the second particles was 4:1. The remaining preparation processes were the same as those in Example 1.

### Example 4

In [Preparation of positive electrode active material], in step S1, the first lithium salt used was 0.5Li₂MnO₃·0.5LiMn_{0.3}Co_{0.7}O₂. The remaining preparation processes were the same as those in Example 1.

### Examples 5 to 15

In [Preparation of positive electrode active material], in step S1 and step S3, the amount of the first lithium salt added was 1.8%, 5%, 15%, 20%, 0.9%, 30%, 0.10%, 5%, 20%, 0.01%, and 25% of the total mass of the first lithium salt and second lithium salt, respectively. The remaining preparation processes were the same as those in Example 1.

### Examples 16 to 20

In [Preparation of positive electrode active material], in step S5, the particle size of the first particles was made to 2 µm, 4 µm, 8 µm, 1 µm, and 10 µm, respectively. The remaining preparation processes were the same as those in Example 1.

### Examples 21 to 25

In [Preparation of positive electrode active material], in step S5, the particle size of the second particles was made to 13 µm, 18 µm, 22 µm, 10 µm, and 25 µm, respectively. The remaining preparation processes were the same as those in Example 1.

### Examples 26 to 30

In [Preparation of positive electrode active material], in step S6, the mixed mass ratio of the first particles to the second particles was 2.3:1, 4:1, 9:1, 1.8:1, and 9.5:1, respectively. The remaining preparation processes were the same as those in Example 1.

### Example 31

In [Preparation of positive electrode active material], in step S0, there is no step S02 of preparing a polycrystalline first lithium salt. The remaining processes were similar to those in Example 1.

### [Tests for parameters of positive electrode active material]

### 1. Composition and mass percentage of the second lithium salt in the positive electrode active material (taking lithium difluorophosphate as an example)

The content of the second lithium salt was tested according to JY/T 020-1996 General rules for ion chromatograpy.

### 2. Median particle size by volume Dᵥ50

D50 was tested according to GB/T19077-2016.

### 3. Coating layer thickness

The IB-19500CP ion polisher was used. Sample preparation tools were cleaned, and a sample adhesive (the gel formed by dispersing PVDF in NMP, where a mass content of PVDF was 8%) was mixed with sample powder (approximately 5 times the weight of the adhesive), and then the resulting mixture was uniformly applied to a copper foil, followed by drying at 60°C for 30 minutes. The prepared sample was cut into 6 mm × 6 mm pieces using scissors. The pieces were fixed to a sample holder, and placed into the ion polisher (model: IB-19500CP) for cutting. The cut samples were put into the American FEI Tecnai G2 transmission electron microscope equipment for thickness testing according to the JBT9352-1999 standard.

### [Battery performance test]

1. Initial discharge capacity

At 25°C, the lithium-ion battery was charged to 4.25 V at a constant current of 1C, and charged to a current of 0.05C at a constant voltage. After being fully charged, the battery was left standing for 5 min, discharged for 30 min at 1C (a state of charge of the battery was 50%SOC), and left standing for 5min. The temperature was adjusted to 25°C, and the battery was left standing for 1 h. A voltage V1 of the battery at this time was recorded. The battery was discharged at 0.4C for 15s, and a voltage V2 after pulse discharge was recorded. A DCR of the battery at 50%SOC was (V1-V2)/I, where I=0.4C.

### 2. Cycling capacity retention rate

At 25°C, charge and discharge tests were performed for lithium-ion batteries of all examples and comparative examples. One charge and discharge cycle was as follows: The battery was charged to 4.25 V at a constant current of 1C, charged at a constant voltage of 4.25 V until the current was ≤0.05 mA, left standing for 5 minutes, and then discharged to 2.8 V at a constant current of 1C. The capacity of the battery at this time was recorded as C1. This was one charge and discharge cycle of the battery. This process was repeated for 200 cycles, and the battery capacity at this time was recorded as C200. Cycling capacity retention rate= C200/C1×100%.

For product parameters of the positive electrode active materials and performance parameters of the lithium-ion batteries of the examples and comparative examples, refer to Table 1 to Table 6.

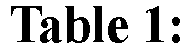

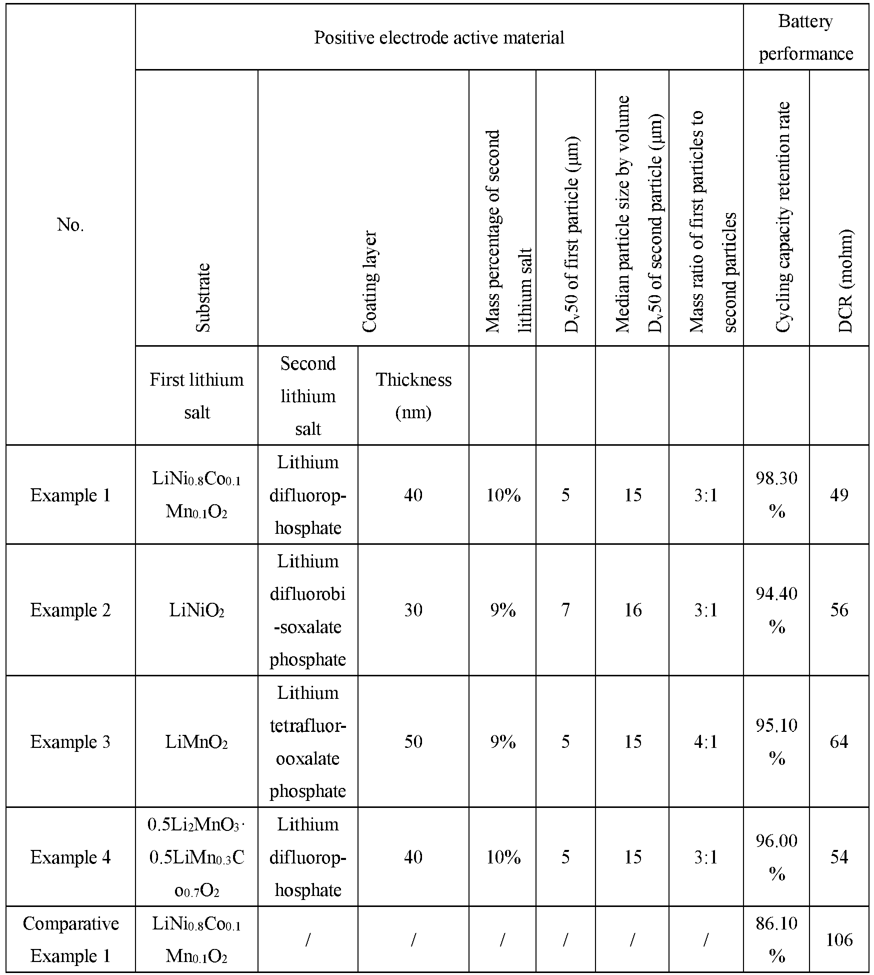

As can be seen from Table 1, Example 1 and Comparative Example 1 show that the power performance and cycle life of the lithium-ion battery are significantly improved, as compared to the case of using the unmodified positive electrode active material LiNi_{0.8}Co_{0.1}Mn_{0.1}O₂. Examples 2 to 4 show that for different first lithium salts, once different kinds of second lithium salts described in this application are used for coating, the lithium-ion batteries all have excellent power performance and cycle life.

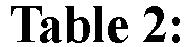

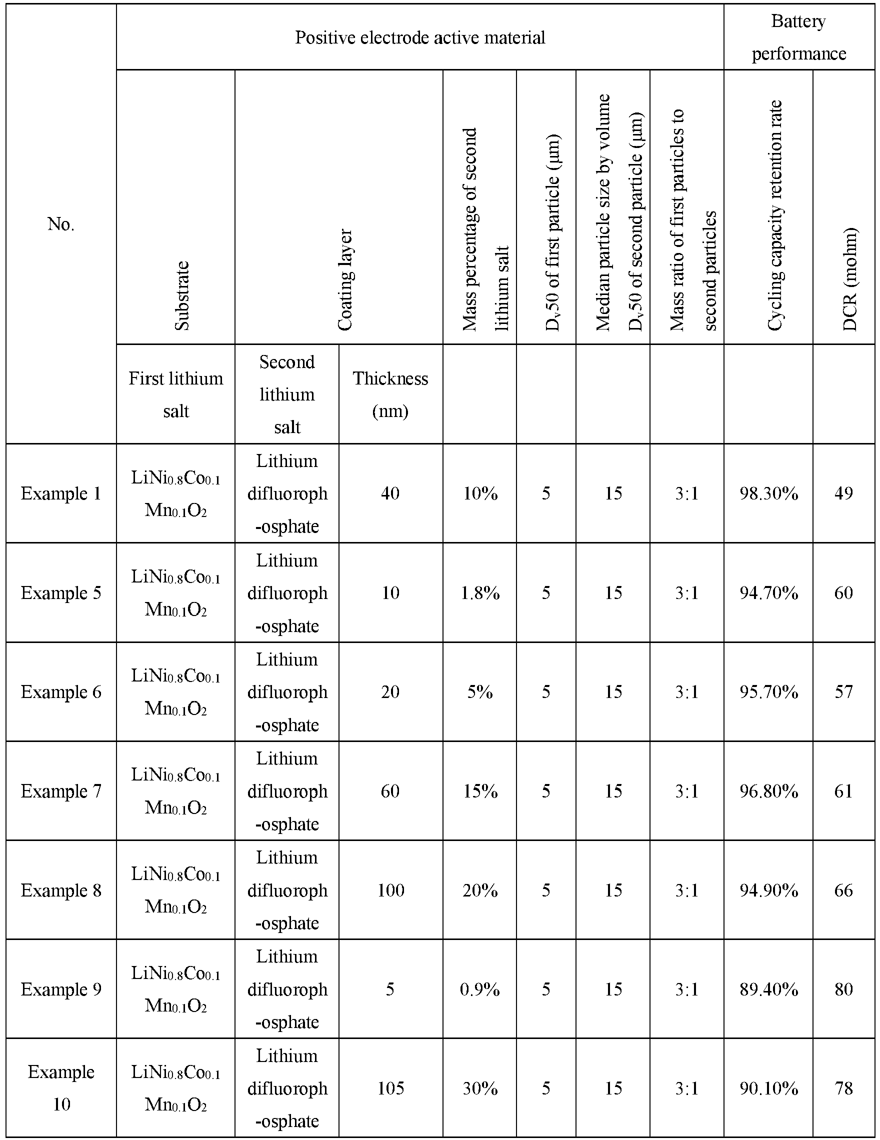

As can be seen from Table 2, the lithium-ion batteries corresponding to Example 1 and Examples 5 to 9 have better power performance and cycle life than Example 9 and Example 10, indicating that the thickness of the coating layer in the range of 10 nm to 100 nm is a preferred range. When the thickness of the coating layer is in the range of 20 nm to 60 nm, the performance is even better.

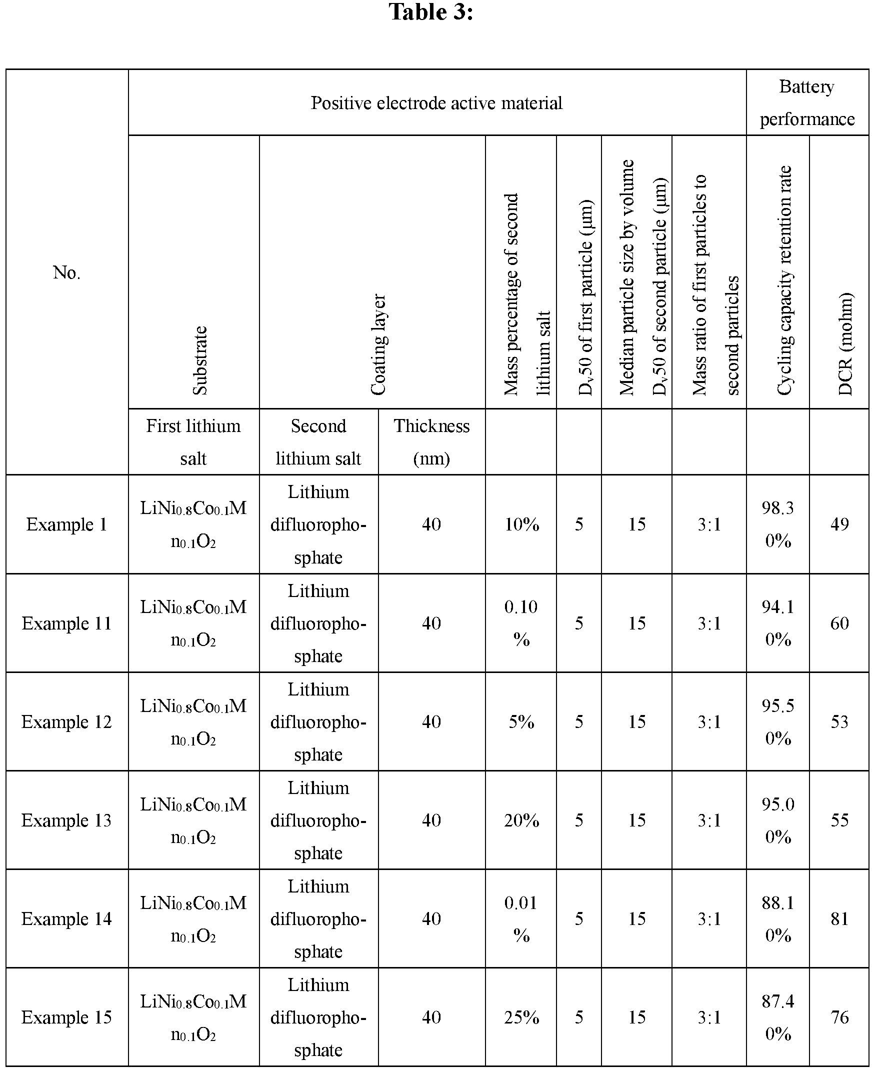

As can be seen from Table 3, the lithium-ion batteries corresponding to Example 1 and Examples 11 to 14 have better power performance and cycle life than Example 14 and Example 15, indicating that the mass percentage of the second lithium salt in the range of 0.1% to 20% is a preferred range. When the mass percentage of the second lithium salt is in the range of 1% to 10%, the performance is even better.

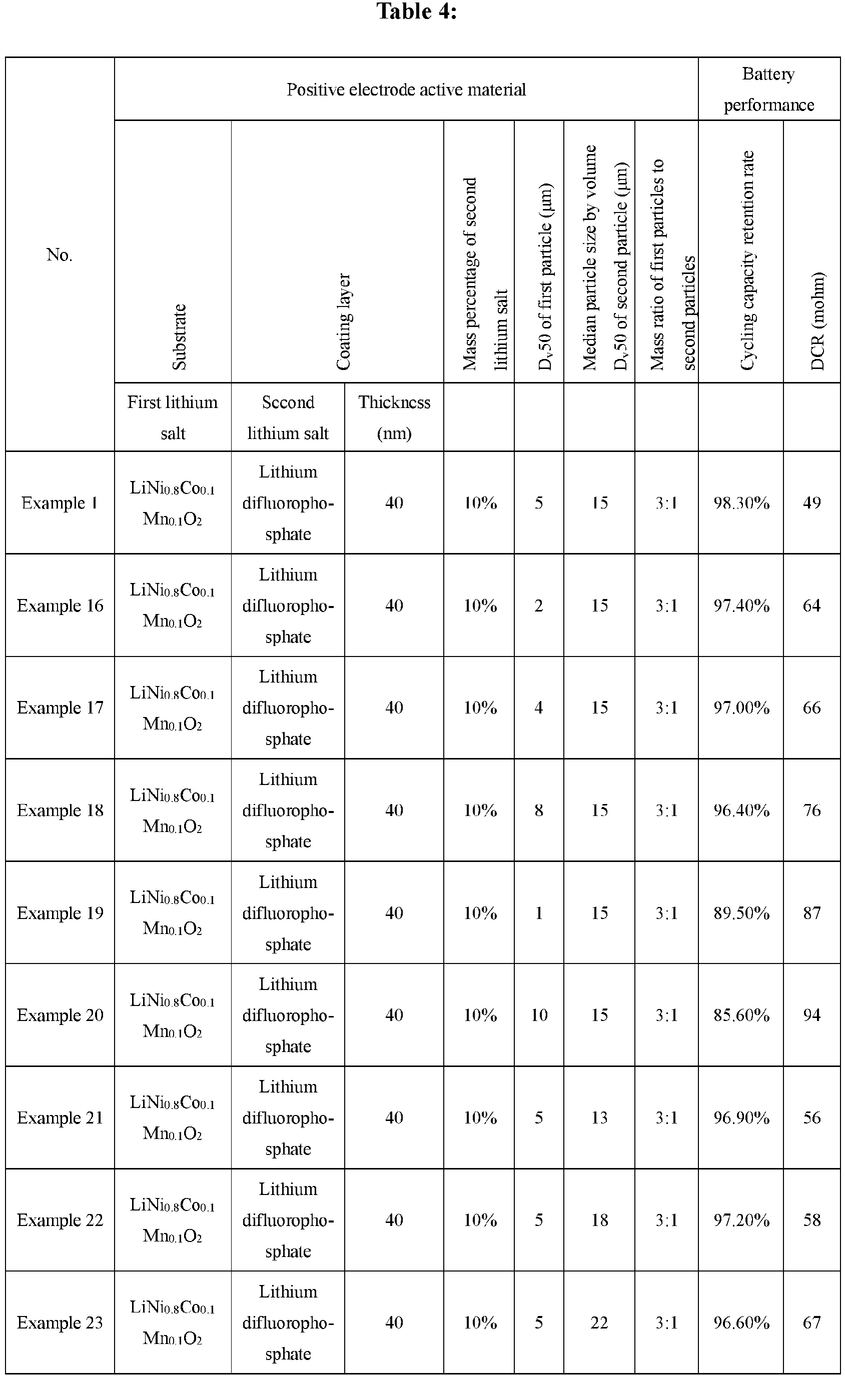

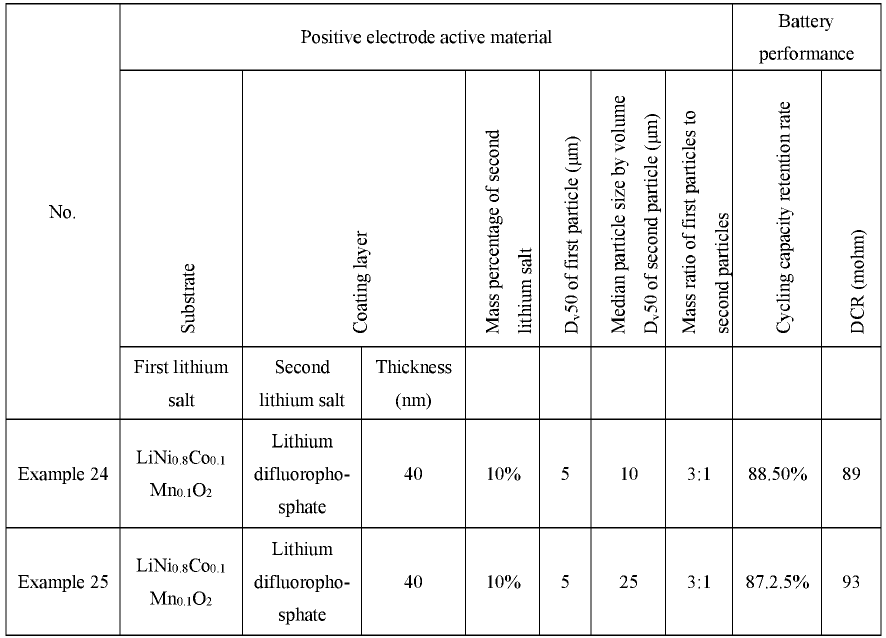

As can be seen from Table 4, the lithium-ion batteries corresponding to Example 1 and Examples 16 to 24 have better power performance and cycle life than Example 24 and Example 25, indicating that when the positive electrode active material consists of first particles with a median particle size by volume Dᵥ50 of 2 µm to 8 µm and second particles with a median particle size by volume Dᵥ50 of 13 µm to 22 µm, the performance is better.

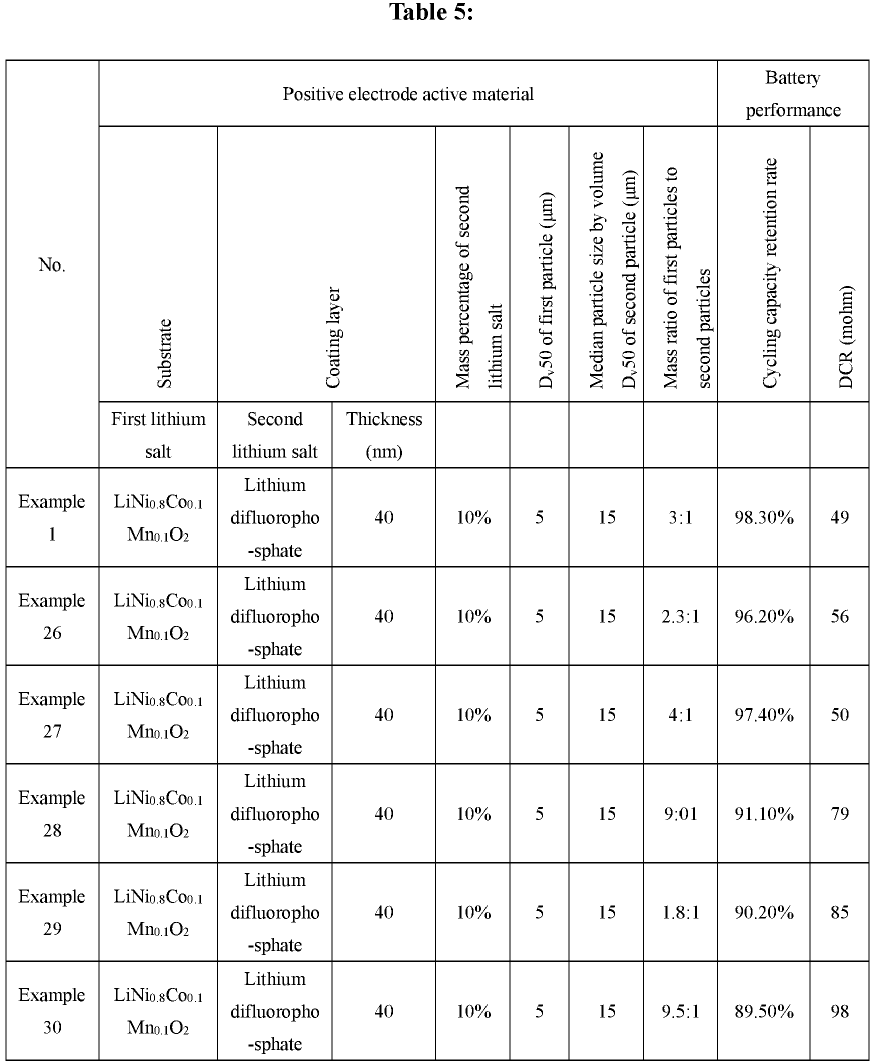

As can be seen from Table 5, the lithium-ion batteries corresponding to Example 1 and Examples 26 to 29 have better power performance and cycle life than Example 29 and Example 30, indicating that when the mass ratio of the first particles to the second particles is in the range of 2.3-9:1, the performance is better.

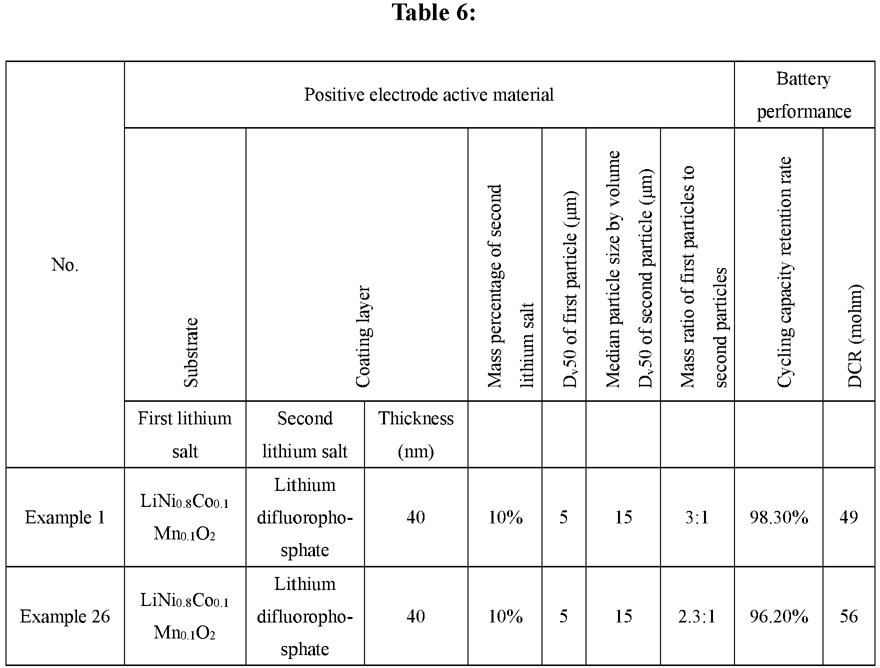

As can be seen from Table 6, when the first particles and second particles include both monocrystalline and polycrystalline types, the power performance of the lithium-ion batteries is further improved.

It should be noted that this application is not limited to the foregoing embodiments. The foregoing embodiments are merely examples, and embodiments having substantially the same constructions and having the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A positive electrode active material, **characterized by** comprising a substrate and a coating layer located on surface of the substrate, wherein
the substrate comprises a first lithium salt, the first lithium salt being selected from at least one of layered-structure LiAO₂, Li[NiₐCo_{b}Mn_{c}]O₂, and lithium-rich manganese-based system xLi₂MnO₃·(1-x)LiMn_{y}B_{1-y}O₂, wherein A is Ni, Co, Mn, or Al, B is selected from one or two metal ions of Ni, Co, or Al, 0.1≤x≤0.9, 0.1≤y≤0.9, 0<a<1, 0<b<1, 0<c<1, and a+b+c=1; and
the coating layer comprises a second lithium salt containing fluorine, phosphorus, and oxygen, the oxygen in the second lithium salt containing lone electron pairs.

2. The positive electrode active material according to claim 1, **characterized in that**
a surface of the coating layer has protruding agglomerated particles formed by the second lithium salt.

3. The positive electrode active material according to claim 1 or 2, **characterized in that**
based on total mass of the positive electrode active material, a mass percentage of the second lithium salt is 0.1% to 20%, optionally 1% to 10%.

4. The positive electrode active material according to any one of claims 1 to 3, **characterized in that**
thickness of the coating layer is 10 nm to 100 nm, optionally 20 nm to 60 nm.

5. The positive electrode active material according to any one of claims 1 to 4, **characterized in that**
the second lithium salt is selected from at least one lithium difluorophosphate, lithium difluorobisoxalatephosphate, and lithium tetrafluorooxalatephosphate.

6. The positive electrode active material according to any one of claims 1 to 5, **characterized in that**
the positive electrode active material comprises first particles with a median particle size by volume Dᵥ50 of 2 µm to 8 µm and second particles with a median particle size by volume Dᵥ50 of 13 µm to 22 µm.

7. The positive electrode active material according to claim 6, **characterized in that**
a mass ratio of the first particles to the second particles is 2.3-9:1.

8. The positive electrode active material according to claim 7, **characterized in that**
the first and/or second particles comprise two crystal forms: monocrystalline and polycrystalline, and a mass ratio of monocrystalline particles to polycrystalline particles is 0.1-1:1, optionally 0.23-0.67:1.

9. A preparation method of positive electrode active substance, **characterized by** comprising the following steps:
S1: drying and dehydrating a first lithium salt to obtain the dried first lithium salt;
S2: dissolving a second lithium salt in an organic solvent to obtain an organic solution of the second lithium salt;
S3: adding the dried first lithium salt to the organic solution of the second lithium salt and mixing to uniformity; and
S4: filtering the well-mixed mixture, and subjecting the resulting solid particles to heat treatment to obtain the positive electrode active material, wherein the positive electrode active material comprises a substrate and a coating layer on surface of the substrate, wherein
the substrate comprises a first lithium salt, the first lithium salt being selected from at least one of layered-structure LiAO₂, Li[NiₐCo_{b}Mn_{c}]O₂, and lithium-rich manganese-based system xLi₂MnO₃·(1-x)LiMn_{y}B_{1-y}O₂, wherein A is Ni, Co, Mn, or Al, B is selected from one or two metal ions of Ni, Co, or Al, 0.1≤x≤0.9, 0.1≤y≤0.9, 0<a<1, 0<b<1, 0<c<1, and a+b+c=1; and the coating layer comprises a second lithium salt containing both fluorine and phosphorus.

10. The preparation method according to claim 9, **characterized in that**
step S0 is further comprised before step S1, wherein step S0 comprises a step of preparing monocrystalline first lithium salt and/or polycrystalline first lithium salt.

11. The preparation method according to claim 9 or 10, **characterized in that**
step S5 is further comprised, wherein step S5 is adjusting a median particle size by volume Dᵥ50 of the positive electrode active material to obtain first particles with a median particle size by volume Dᵥ50 of 2 µm to 8 µm and second particles with a median particle size by volume Dᵥ50 of 13 µm to 22 µm.

12. The preparation method according to claim 11, **characterized in that**
step S6 is further comprised, wherein step S6 comprises mixing the first particles and the second particles according to a predetermined mass ratio to obtain the positive electrode active material.

13. The preparation method according to any one of claims 9 to 12, **characterized in that**
in S1, a temperature range for drying and dehydrating the first lithium salt is 100°C-200°C; and/or
in S2, the organic solvent is an ether, carboxylic acid ester, or carbonate ester organic solvent; and/or
in S3, the mixing to uniformity is performed by stirring and dispersing at 50°C-100°C for 4 h-8 h; and/or
in S4, the heat treatment is performed at 200°C-250°C in an air atmosphere for 5 h-10 h.

14. A lithium-ion battery, comprising a positive electrode plate, a separator, and a negative electrode plate, **characterized in that**
the positive electrode plate comprises the positive electrode active material according to any one of claims 1 to 8 or a positive electrode active material prepared using the preparation method according to any one of claims 9 to 13.
